# EUROPEAN PATENT APPLICATION

(11) **EP 1 342 854 A1**
(43) Date of publication of application: **10.09.2003**
(21) Application number: 02425119.1
(22) Date of filing: 04.03.2002
(51) Int. Cl.: E03C 1/02

(54) **Expansion kit for showers and the like**

(71) Applicant: Euro-Idea S.r.l., 20131 Milano (IT)
(72) Inventor: Van Voorst tot Voorst, Sweder, 20017 Rho (MI) (IT)
(74) Representative: Pizzoli, Antonio

(57) **Abstract**

Expansion kit for showers and the like, which comprises a plurality of supplementary outlets (1) suitable for being connected by means of external flexible tubes (2) to one distributor (3) suitable for being in turn connected to a water delivery duct (4), said supplementary outlets (1) and said distributor (3) being provided with wall fixing means (17, 27). The kit can also comprise a further flexible tube (6) having the ends suitable for being connected to two threaded connections (7) to be screwed to the delivery duct (4) and to a threaded inlet duct (8) fixed to the distributor (3), in particular made in a single piece with it.

## Description

The present invention relates to an expansion kit for showers and the like, and in particular a kit which can be employed for adding a plurality of supplementary outlets to the main outlet of an already installed shower.

Known multi-function showers comprise a faucet connected to one or more delivery ducts supplying water to a main outlet and to a plurality of supplementary outlets arranged on one or more columns under the main outlet. The tubes connecting the faucet to the outlets, so as the same outlets, are generally immured in one or more walls of the shower or are arranged inside a column to be fixed to a wall. If it is desired to add the supplementary outlets to a shower which is not provided with them, it is therefore necessary to carry out complex building and hydraulic works, with consequent high costs and times.

It is therefore an object of the present invention to provide for an expansion kit for showers and the like which avoids said disadvantage, i.e. a kit which allows to add the supplementary outlets in a simple, quick and cheap manner to a shower lacking in them. Said object is achieved with a kit, the main features of which are disclosed in the first claim and other features are disclosed in the subsequent claims.

Thanks to the particular distributor and supplementary outlets, the kit according to the present invention can be easily and quickly applied to an existing water delivery duct, which is present in the showers and/or in the faucets of the bathrooms.

According to a particular advantageous aspect of the invention, the distributor and the supplementary outlets are provided with removable wall fixing means, so that they can be easily and freely arranged, rearranged and removed on one or more walls of a bathroom.

The kit according to the present invention can also be installed between a delivery duct and a main outlet already existing, so as to go on freely using the latter.

Finally, thanks to the particular structure of the parts which is made up of, the kit according to the present invention is simple and cheap to be manufactured, maintained and repaired.

Further advantages and features of the kit according to the present invention will become clear to those skilled in the art from the following detailed and nonlimiting description of an embodiment thereof, with reference to the attached drawings, wherein:
- figure 1 shows a front exploded view of a shower provided with the kit according to the present embodiment of the invention;
- figure 2 shows a top perspective view of the distributor of the kit of figure 1;
- figure 3 shows a bottom perspective view of the cover of the distributor of figure 2;
- figure 4 shows a top perspective view of the hollow body of the distributor of figure 2;
- figure 5 shows a top perspective view of a supplementary outlet of the kit of figure 1;
- figure 6 shows a top perspective view of the nozzle of the supplementary outlet of figure 5;
- figure 7 shows a bottom perspective view of the nozzle of the supplementary outlet of figure 5;
- figure 8 shows a bottom perspective view of the closure ring of the supplementary outlet of figure 5;
- figure 9 shows a top perspective view of the hollow body of the supplementary outlet of figure 5;
- figure 10 shows a side exploded view of the supplementary outlet of figure 5; and
- figure 11 shows a side exploded view of the distributor of figure 2.

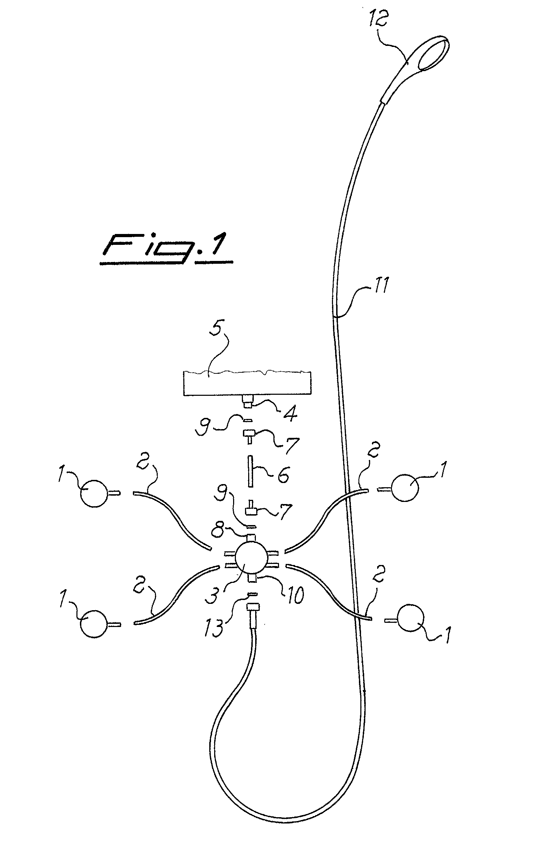

Referring to figure 1, it is seen that the kit according to the present embodiment of the invention suitably comprises a plurality of supplementary outlets 1 suitable for being connected by means of external flexible tubes 2 to a distributor 3 suitable for being in turn connected to a water delivery duct 4, for instance belonging to a faucet 5. Distributor 3 can be connected to the delivery duct 4 by means of a further flexible tube 6 having the ends suitable for being fitted into two threaded connections 7 to be screwed to the delivery duct 4 and to an inlet duct 8 of distributor 3, respectively, after that an annular gasket 10 is arranged between them. Distributor 3 is also preferably provided with an outlet duct 10 in which the end of a tube 11 having a main outlet 12 at the opposite end, for example the outlet which was previously screwed to the delivery duct 4, can be screwed after that an annular gasket 13 is arranged between them.

With reference to figure 2, it is seen that distributor 3 comprises a substantially cylindrical-shaped hollow body 14, which is made of a plastic material and is closed by a substantially circular-shaped cover 15. The inlet duct 8, the outlet duct 10 and a plurality of derivation ducts 16 are fixed, in particular made in a single piece, onto the lateral surface of the hollow body 14. The flexible tubes 2, which are preferably obtained, so as the flexible tube 6, by cutting at a desired length a single long tube of rubber or plastic, can be fitted into the derivation ducts 16. Ducts 8 and/or 10 are preferably threaded with a standard thread, for instance 1/2 Gas, for being compatible with the tubes manufactured by third parties. Wall fixing means, preferably removable as a suction cup 17, are suitably arranged under the base of the hollow body 14. Cover 15 is fixed in a coaxial manner in the middle of the hollow body 14 so as to rotate around its own axis. For this purpose, a selector 18 is fixed, in particular made in a single piece, onto cover 15.

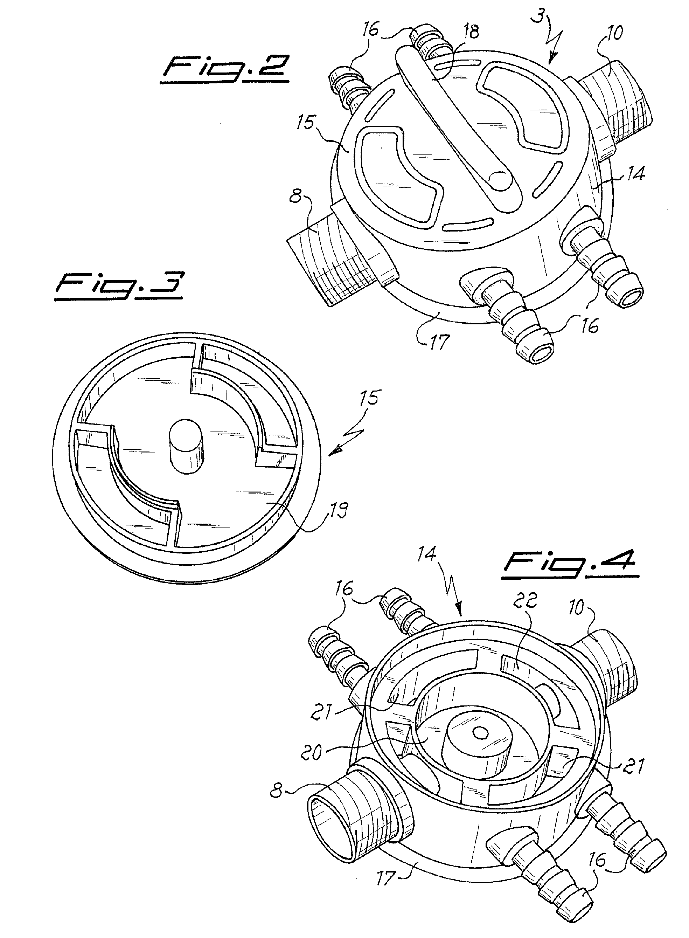

In figures 3 and 4 it is seen that a shaped channel 19 suitable for connecting a central well 20 with a pair of derivation wells 21 and/or an outlet well 22, all made in the hollow body 14, is made under cover 15. Both derivation wells 21 are connected to a group comprising one or more derivation ducts 16, while the central well 20 and the outlet well 22 are connected to the inlet duct 8 and the outlet duct 10, respectively, or vice versa. By rotating cover 15, it is therefore possible to deviate the water coming from the inlet duct 8 to the outlet duct 10 and/or to the groups of derivation ducts 16.

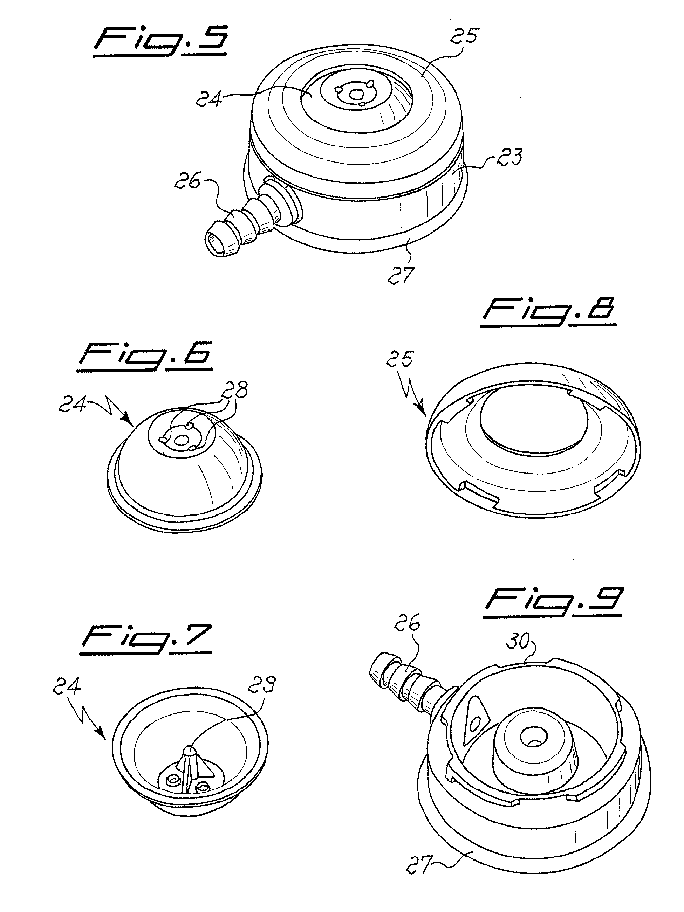

Referring now to figure 5, it is seen that the supplementary outlets 1 comprise a substantially cylindrical-shaped hollow body 23, which is made of a plastic material and is closed by a substantially dome-shaped adjustable nozzle 24, which is locked by a closure ring 25 fixed to the hollow body 23. At least one inlet duct 26 on which a flexible tube 2 can be fitted, is fixed, in particular made in a single piece, onto the lateral surface of the hollow body 23. Wall fixing means, preferably removable as a suction cup 27, are suitably arranged under the base of the hollow body 23.

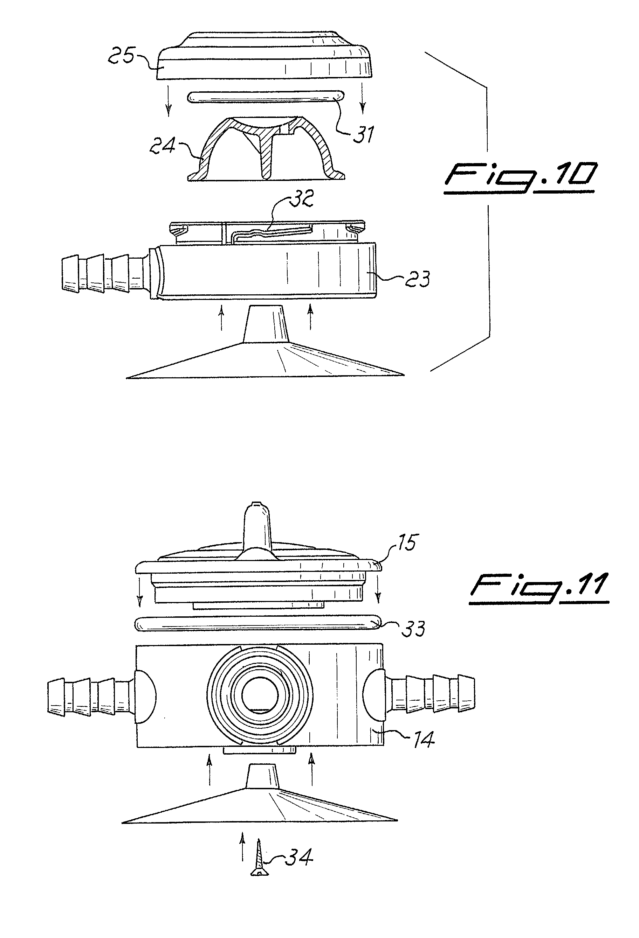

In figures 6 to 9, it is seen that nozzle 24 is provided with one or more holes 28 for ejecting the water coming from the inlet duct 26, as well as with a central pin 29 which is inserted into a corresponding central seat 30 made in the hollow body 23, so that nozzle 24 can be oriented along two axis.

With reference to figure 10, it is seen that during the assembly of the supplementary outlets 1 an annular gasket 31 is inserted between nozzle 24 and the closure ring 25, which is fixed to the hollow body 23 by means of a plurality of bayonet sockets 32.

Finally, referring to figure 11, it is seen that during the assembly of distributor 3 an annular gasket 33 is inserted between cover 15 and the hollow body 14, which are mutually fixed by a screw 34 inserted into a central hole of the hollow body 14.

## Claims

1. Expansion kit for showers and the like, **characterized in that** it comprises a plurality of supplementary outlets (1) suitable for being connected by means of external flexible tubes (2) to at least one distributor (3) suitable for being in turn connected to a water delivery duct (4), said supplementary outlets (1) and said distributor (3) being suitable for being fixed to one or more walls.

2. Kit according to the previous claim, **characterized in that** the supplementary outlets (1) and/or the distributor (3) are provided with wall fixing means (17, 27).

3. Kit according to claim 2, **characterized in that** the wall fixing means (17, 27) are removable, in particular consisting in a suction cup.

4. Kit according to one of the previous claims, **characterized in that** the supplementary outlets (1) comprise a hollow body (23) in a plastic material which is closed by an adjustable nozzle (24) locked by a closure ring (25) fixed to the hollow body (23), at least one inlet duct (26) suitable for being connected to a flexible tube (2) being fixed, in particular made in a single piece, onto the lateral surface of the hollow body (23).

5. Kit according to one of the previous claims, **characterized in that** it comprises a further flexible tube (6) having the ends suitable for being connected to two connections (7) to be respectively connected to the delivery duct (4) and to an inlet duct (8) fixed to the distributor (3), in particular made in a single piece with it.

6. Kit according to one of the previous claims, **characterized in that** the distributor (3) is provided with an outlet duct (10) which can be connected to the end of a tube (11) having a main outlet (12) at the opposite end

7. Kit according to claim 5 or 6, **characterized in that** one or two connections (7), the inlet duct (8) and/or the outlet duct (10) are threaded, preferably with a standard thread, for example 1/2 Gas.

8. Kit according to one of the previous claims, **characterized in that** the distributor (3) comprises a hollow body (14) in a plastic material which is closed by a rotating cover (15), the inlet duct (8), the outlet duct (10), if present, and a plurality of derivation ducts (16) suitable for being connected to a flexible tube (2) being fixed, in particular made in a single piece, onto the lateral surface of the hollow body (14).

9. Kit according to claim 8, **characterized in that** a shaped channel (19) suitable for mutually connecting a central well (20), one or more derivation wells (21) and an outlet well (22), all made in the hollow body (14), is made under the rotating cover (15), said derivation wells (21) being connected to a group comprising one or more derivation ducts (16), while the central well (20) and the outlet well (22) are connected to the inlet duct (8) and to the outlet duct (10), respectively, or vice versa, so that by rotating the cover (15), the water coming from the inlet duct (8) is deviated to the outlet duct (10) and/or to the groups of derivation ducts (16).

10. Kit according to one of the previous claims, **characterized in that** one or more flexible tubes (2, 6) are connected to the derivation ducts (16) of the distributor (3), to the inlet ducts (26) of the supplementary outlets (1) and/or to the threaded connections (7) by means of fittings.
